# EUROPÄISCHE PATENTSCHRIFT

(11) **EP 0 818 269 B1**
(45) Veröffentlichungstag und Bekanntmachung des Hinweises auf die Patenterteilung: **30.01.2002**
(21) Anmeldenummer: 97110468.2
(22) Anmeldetag: 26.06.1997
(51) Int. Cl.: B23K 20/12, B60B 35/16, B60G 7/00, B62D 7/18

(54) **Fahrwerksanordnung**
Running gear arrangement
Agencement du train de roulement

(30) Priorität: 11.07.1996 DE 19627919
(43) Veröffentlichungstag der Anmeldung: 14.01.1998
(73) Patentinhaber: Volkswagen Aktiengesellschaft, 38436 Wolfsburg (DE)
(72) Erfinder: Ruholl, Herbert, 38100 Braunschweig (DE); Scholz, Hans-Werner, 38446 Wolfsburg (DE)

(56) Entgegenhaltungen:
- DE-A- 19 519 576
- DE-C- 19 501 508
- GB-A- 1 226 404
- GB-A- 2 091 153
- US-A- 4 768 839
- US-A- 5 435 590
- PATENT ABSTRACTS OF JAPAN vol. 015, no. 457 (M-1181), 20.November 1991 & JP 03 193512 A (MAZDA MOTOR CORP), 23.August 1991,

## Beschreibung

Die Erfindung bezieht sich auf eine Fahrwerksanordnung gemäß dem Oberbegriff von Anspruch 1 und ein Verfahren zum Herstellen einer derartigen Fahrwerksanordnung.

Zur starren Verbindung einer Radlagerhülse mit einem Fahrwerksbauteil eines Kraftfahrzeugs, wie z. B. einem Radführungslenker, sind verschiedene Maßnahmen bekannt. Die jeweilige Verbindung der Lagerhülse mit dem Fahrwerksbauteil ist dabei von den für diesen beiden Bauteile verwendeten Materialien abhängig. Die Radlagerhülse muß dabei eine hinreichend hohe Festigkeit aufweisen, so daß als Material durchweg Stahl verwendet wird. Wird als Material für das Fahrwerksbauteil ebenfalls Stahl verwendet, so können die beiden Bauteile einteilig ausgebildet werden und in einem Fertigungsschritt hergestellt werden.

Bei Verwendung von Aluminium oder einer Aluminiumlegierung für das Fahrwerksbauteil müssen zwei aus unterschiedlichen Materialien hergestellte Bauteile, die Lagerhülse aus Stahl und das Aluminium-Fahrwerksbauteil, in einem nachfolgenden Fertigungsschritt zusammengefügt werden.

Dokument DE-C1-19501508 offenbart, daß eine Gewichtsreduzierung eines Bauteiles eines Fahrwerks erreicht werden kann durch die Herstellung dieses Bauteiles aus Aluminium.

Dokument GB-A-2091153 offenbart ein Verfahren zur Reibschweißen eines Bauteiles aus Stahl mit einem Bauteil aus Aluminium wobei eine ausreichende Stärke der Schweißverbindung erreicht wird.

Die DE 40 38 917 C1 beschreibt eine Fahrwerksanordnung, bei der der Lageraußenring mit einem ringförmigen Flansch versehen ist, der mittels Schrauben an einem Radträger befestigt wird. Eine solche Flanschverbindung ist grundsätzlich für die Verwendung von Aluminium für das Fahrwerkbauteil geeignet.

Sie ist jedoch aufwendig und somit kostenungünstig, da die Radlagerhülse in einem aufwendigen Flansch integriert werden muß, der über Bohrungen und zusätzliche Schrauben am Fahrwerksbauteil festgeschraubt werden muß. Das Fahrwerksbauteil muß dabei ebenfalls mit entsprechenden Bohrungen für die Aufnahme der Schrauben versehen werden, so daß in diesem Bereich eventuell eine Schwächung des Fahrwerksbauteil auftreten kann.

Der Erfindung liegt die Aufgabe zugrunde, eine zumindest teilweise aus Aluminium bestehende Fahrwerksanordnung zu schaffen, bei der zum einen eine ausreichende Festigkeit der Radlagerhülse gewährleistet ist und die dennoch kostengünstig und mit geringem Material- und Fertigungsaufwand hergestellt werden kann.

Diese Aufgabe wird durch eine Fahrwerksanordnung nach Anspruch 1 und ein Verfahren zum Herstellen einer Fahrwerksanordnung nach Anspruch 10 gelöst. Die Unteransprüche beschreiben bevorzugte Weiterbildungen der erfindungsgemäßen Fahrwerksanordnung.

Indem erfindungsgemäß eine Radlagerhülse aus Stahl an dem Fahrwerksbauteil aus Aluminium durch eine Reibschweißung angebracht wird, kann das Radlager mit Preßsitz in einer Stahlhülse mit ausreichender Festigkeit eingefügt werden, und dennoch eine einfache Herstellung der Fahrwerksanordnung gewährleistet werden. Da der Reibschweißvorgang auch an einem bereits fertig hergestellten Fahrwerksbauteil möglich ist, können beide Bauteile separat hergestellt und anschließend durch einen einfachen Fertigungsschritt zusammengefügt werden.

Die Radlagerhülse kann dabei entweder nach Anspruch 2 direkt mit dem Fahrwerksbauteil verschweißt werden, oder sie kann nach Anspruch 4 bzw. 11 mit einer Aluminiumschicht versehen werden, so daß bei dem anschließenden Reibschweißvorgang zwei Aluminiumschichten miteinander verschweißt werden und in der Reibschweißzone keine störenden intermetallischen Phasen oder anderen Aluminium-Eisen-Mischphasen auftreten können, die die Festigkeit des Bauteils beeinträchtigen könnten. Weiterhin kann eine zusätzliche Zwischenschicht zwischen der Stahlhülse und dem Fahrwerksbauteil angebracht werden, die eine günstige Kontaktbildung der beiden Bauteile erlaubt. Die Zwischenschicht kann dabei nach Anspruch 6 durch einen zusätzlichen Reibschweißvorgang angebracht werden.

Die Verbindungsfläche zwischen den beiden Bauteilen kann dabei vergrößert werden, indem die Radlagerhülse nach Anspruch 7 mit einem sich radial nach außen erstreckenden Vorsprung versehen wird. Indem die so erzeugten beiden Verbindungsflächen nach Anspruch 8 axial zueinander versetzt angeordnet werden, ist die Bindung zwischen der Lagerhülse und dem Fahrwerksbauteil auch stabil gegenüber auf die Räder einwirkenden Drehmomenten, insbesondere bei Ein- und Ausfedervorgängen des Kraftfahrzeugrads.

Die Erfindung wird im folgenden anhand der beiliegenden Zeichnungen an einigen Ausführungsformen näher erläutert. Es zeigen:
- Figur 1: eine teilweise geschnittene Darstellung einer Fahrwerksanordnung gemäß einer ersten Ausführungsform der Erfindung;
- Figur 2: einen vergrößerten Ausschnitt II aus Figur 1;
- Figur 3: einen Ausschnitt aus einer Fahrwerksanordnung gemäß einer zweiten Ausführungsform der Erfindung;
- Figur 4: einen Ausschnitt aus einer Fahrwerksanordnung gemäß einer dritten Ausführungsform der Erfindung.

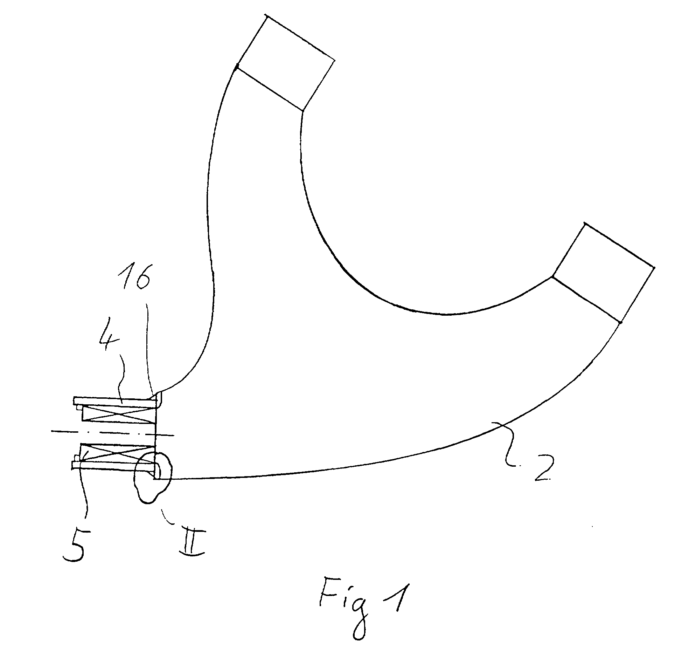

Gemäß Figur 1 ist an einem Schräglenker 2 aus Aluminium oder einer Aluminiumlegierung eine Radlagerhülse 4 durch eine Reibschweißung angebracht. Die Radlagerhülse 4 dient dabei in bekannter Weise zur Aufnahme eines Radlagers 5, das durch einen Preßsitz in die Radlagerhülse eingebracht ist. im Bereich einer Verbindungsfläche 16 zwischen den beiden Bauteilen bildet sich aufgrund des Reibschweißvorgangs eine Schweißzone aus, in der Mischphasen der Metalle der beiden Bauteile auftreten können.

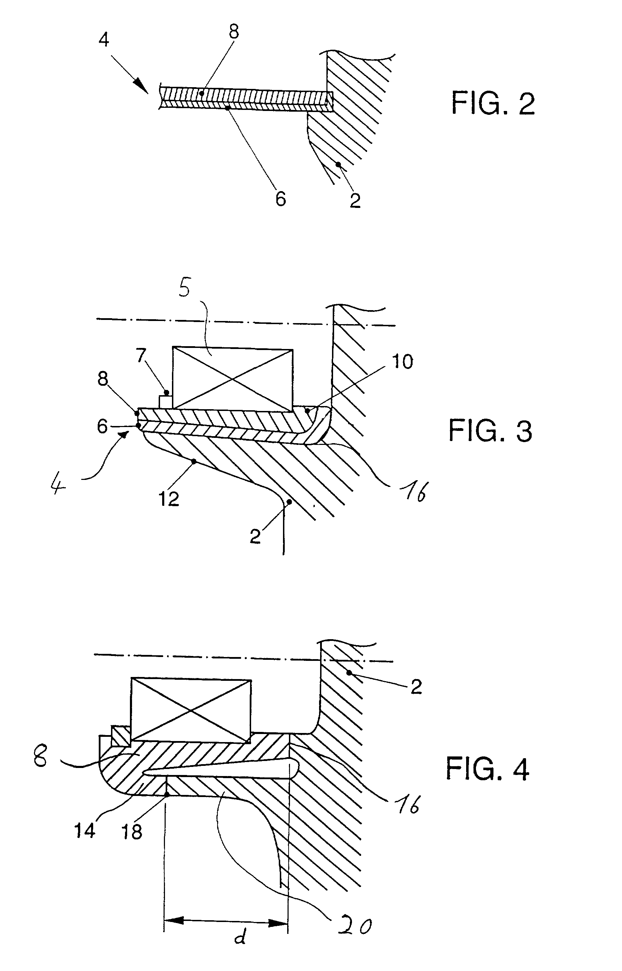

Um das Auftreten unerwünschter intermetallischer Phasen zwischen dem Eisen der Stahlhülse und dem Aluminium des Schräglenkers zu vermeiden, kann die Radlagerhülse 4 gemäß Figur 2 als Stahlhülse 8 mit einer Aluminiumschicht 6 auf ihrer Außenseite sowie ihrer Stirnfläche versehen werden, so daß bei dem Reibschweißvorgang, bei dem die Radlagerhülse 4 mit dem Schräglenker 2 verbunden wird, die Aluminiumschicht 6 mit dem Aluminium des Schräglenkers 2 verschweißt wird, so daß keine unerwünschten Mischphasen des Aluminium mit dem Eisen der Stahlhülse 8 auftreten. Die Aluminiumschicht 6 kann dabei als Aluminiumplatierung auf der Stahlhülse 8 aufgetragen werden. Weiterhin kann auf der Aluminiumschicht 6 auch eine zusätzliche, die Reibschweißung unterstützende Zwischenschicht aufgetragen werden, z. B. eine nickelhaltige Legierung.

In der in Figur 3 gezeigten Ausführungsform ist der Schräglenker 2 oder ein entsprechendes zur Aufnahme des Radlagers geeignetes anderes Fahrwerksbauteil, mit einem topfartigen Fortsatz 12 versehen, der zur Aufnahme der Radlagerhülse dient. Die Radlagerhülse wird dabei aus einer Stahlhülse 8 mit einer äußeren Aluminiumschicht 6 gebildet, wobei in der gezeigten Ausführungsform die Stahlhülse 8 mit einer axialen Hintergreifung 10 versehen ist, die zusammen mit einem Sicherungsring 7 zur axialen Fixierung des Radlagers 5 dient. Der topfartige Fortsatz 12 ermöglicht dabei aufgrund des Formschlusses mit der Radlagerhülse 4 eine sichere Anbringung der Radlagerhülse 4. Aufgrund der großen Verbindungsfläche 16 zwischen der Radlagerhülse 4 und dem Fahrwerksbauteil 2 ist die Verbindung auch gegenüber in axialer Richtung angreifenden Kräften hinreichend fest ausgebildet.

Figur 4 zeigt eine weitere Ausführungsform, bei der das Fahrwerksbauteil 2 ebenfalls einen topfartigen Fortsatz 20 hat, wobei zwischen der Stahlhülse 8 und dem Fahrwerksbauteil 2 zwei radial und axial beabstandete Verbindungsflächen 16 und 18 ausgebildet sind. Die Stahlhülse 8 weist einen sich radial nach außen erstreckenden Vorsprung 14 auf, der an seiner axialen Stirnfläche mit dem topfartigen Fortsatz 20 verschweißt ist. Aufgrund des radialen Abstands und des axialen Abstands d zwischen der Verbindungsfläche 16 und der Verbindungsfläche 18 ist diese Fahrwerksanordnung auch zur Aufnahme von an dem Radlager angreifenden Drehmomenten, wie sie z. B. bei Ein- und Ausfedervorgängen des Fahrzeugrads gegenüber dem Fahrzeugaufbau auftreten, geeignet. Die Stahlhülse 8 kann dabei ebenfalls an ihren stirnseitigen Reibschweißflächen mit Aluminium sowie gegebenenfalls einer zusätzlichen die Reibschweißung unterstützenden Schicht versehen werden, um das Auftreten unerwünschter intermetallischer Phasen zu verhindern.

Erfindungsgemäß muß die Anbringung der Radlagerhülse nicht bereits in den Verfahrensschritt der Fertigung des Schräglenkers integriert werden muß, wie es z. B. bei einem Eingießen einer Stahlhülse in einen Aluminium-Schräglenker der Fall wäre.

## Patentansprüche

1. Fahrwerksanordnung für ein Kraftfahrzeug, mit einem radführenden Fahrwerksbauteil (2), an dem eine Radlagerhülse (4) starr angebracht ist,
**dadurch gekennzeichnet, daß**
das Fahrwerksbauteil (2) aus Aluminium oder einer Aluminiumlegierung hergestellt ist und
die Radlagerhülse (4) aus Stahl gefertigt ist und mit dem Fahrwerksbauteil durch eine Reibschweißung verbunden ist.

2. Fahrwerksanordnung nach Anspruch 1, **dadurch gekennzeichnet, daß** die Radlagerhülse (4) aus Stahl besteht und direkt mit dem Fahrwerksbauteil (2) durch einen Reibschweißvorgang verbunden ist.

3. Fahrwerksanordnung nach Anspruch 1 oder 2, **dadurch gekennzeichnet, daß** die Radlagerhülse eine Aluminiumschicht (6) aufweist, vorzugsweise Aluminium-platiert ist.

4. Fahrwerksanordnung nach einem der Ansprüche 1 bis 3, **dadurch gekennzeichnet, daß** die Radlagerhülse (4) mit dem Fahrwerksbauteil (2) entlang eines Umfangsbereichs verbunden ist.

5. Fahrwerksanordnung nach einem der Ansprüche 1 bis 4, **dadurch gekennzeichnet, daß** zwischen der Radlagerhülse (4) und dem Fahrwerksbauteil (2) eine Zwischenschicht vorhanden ist.

6. Fahrwerksanordnung nach Anspruch 5, **dadurch gekennzeichnet, daß** die Zwischenschicht durch eine Reibschweißung angebracht ist.

7. Fahrwerksanordnung nach einem der Ansprüche 1 bis 6, **dadurch gekennzeichnet, daß** die Radlagerhülse (4) einen sich radial nach außen erstreckenden Vorsprung (14) aufweist, der eine Verbindungsfläche (18) mit dem Fahrwerksbauteil aufweist.

8. Fahrwerksanordnung nach Anspruch 7, **dadurch gekennzeichnet, daß** das Fahrwerksbauteil (2) einen topfartigen Fortsatz (20) aufweist, der über die zusätzliche Verbindungsfläche (18) mit dem Vorsprung (14) der Radlagerhülse (4) verschweißt ist.

9. Fahrwerksanordnung nach Anspruch 8, **dadurch gekennzeichnet, daß** eine Verbindungsfläche (16) zwischen der Radlagerhülse (4) und dem Fahrwerksbauteil (2) und die zusätzliche Verbindungsfläche (18) zwischen dem radialen Vorsprung (14) der Stahlhülse (8) und dem Fahrwerksbauteil (2) einen axialen Abstand (d) zueinander aufweisen.

10. Verfahren zur Herstellung einer Fahrwerksanordnung nach einem der Ansprüche 1 bis 9, **dadurch gekennzeichnet, daß** eine Radlagerhülse (4), die aus einem Stahl gefertigt ist und mit einem Fahrwerksbauteil (2) aus Aluminium oder einer Aluminium-Legierung durch eine Reibschweißung verbunden wird.

11. Verfahren nach Anspruch 10 zum Herstellen einer Fahrwerksanordnung nach Anspruch 4, **dadurch gekennzeichnet, daß** eine Aluminium-Schicht (6) auf die Radlagerhülse (4) aufgetragen wird, vorzugsweise durch eine Platierung, und die beschichtete Radlagerhülse (4) nachfolgend an das Fahrwerksbauteil (2) angeschweißt wird.

## Claims

1. Running-gear arrangement for a motor vehicle, with a wheel-guiding running-gear component (2), to which a wheel bearing sleeve (4) is rigidly attached, **characterized in that** the running-gear component (2) is produced from aluminium or an aluminium alloy and the wheel bearing sleeve (4) is manufactured from steel and is connected to the running-gear component by a friction weld.

2. Running-gear arrangement according to Claim 1, **characterized in that** the wheel bearing sleeve (4) is composed of steel and is connected directly to the running-gear component (2) by a friction-welding operation.

3. Running-gear arrangement according to Claim 1 or 2, **characterized in that** the wheel bearing sleeve has an aluminium layer (6), preferably being aluminium-plated.

4. Running-gear arrangement according to one of Claims 1 to 3, **characterized in that** the wheel bearing sleeve (4) is connected to the running-gear component (2) along a circumferential region.

5. Running-gear arrangement according to one of Claims 1 to 4, **characterized in that** there is an interlayer between the wheel bearing sleeve (4) and the running-gear component (2).

6. Running-gear arrangement according to Claim 5, **characterized in that** the interlayer is applied by means of a friction weld.

7. Running-gear arrangement according to one of Claims 1 to 6, **characterized in that** the wheel bearing sleeve (4) has a projection (14) that extends radially outwards and has a connecting surface (18) with the running-gear component.

8. Running-gear arrangement according to Claim 7, **characterized in that** the running-gear component (2) has a cup-shaped extension (20), which is welded to the projection (14) of the wheel bearing sleeve via the additional connecting surface (18).

9. Running-gear arrangement according to Claim 8, **characterized in that** a connecting surface (16) between the wheel bearing sleeve (4) and the running-gear component (2) and the additional connecting surface (18) between the radial projection (14) of the steel sleeve (8) and the running-gear component (2) have an axial spacing (d) with respect to one another.

10. Method for the production of a running-gear arrangement according to one of Claims 1 to 9, **characterized in that** a wheel bearing sleeve (4) is manufactured from steel and is connected to a running-gear component (2) composed of aluminium or an aluminium alloy by a friction weld.

11. Method according to Claim 10 for the production of a running-gear arrangement according to Claim 4, **characterized in that** an aluminium layer (6) is applied to the wheel bearing sleeve (4), preferably by plating, and the coated wheel bearing sleeve (4) is subsequently welded to the running-gear component (2).

## Revendications

1. Agencement de train de roulement pour un véhicule automobile, présentant un composant (2) de train de roulement avec guidage des roues sur lequel une douille (4) de palier de roue est installée fixement, **caractérisé en ce que** le composant (2) de train de roulement est réalisé en aluminium ou en un alliage d'aluminium, et **en ce que** la douille (4) de palier de roue est réalisée en acier et est reliée au composant de train de roulement par soudage par friction.

2. Agencement de train de roulement selon la revendication 1, **caractérisé en ce que** la douille (4) de palier de roue est réalisée en acier et est reliée directement au composant (2) de train de roulement par une opération de soudage par friction.

3. Agencement de train de roulement selon la revendication 1 ou 2, **caractérisé en ce que** la douille de palier de roue présente une couche d'aluminium (6) et est de préférence plaquée d'aluminium.

4. Agencement de train de roulement selon l'une des revendications 1 à 3, **caractérisé en ce que** la douille (4) de palier de roue est reliée au composant (2) de train de roulement le long d'une zone périphérique.

5. Agencement de train de roulement selon l'une des revendications 1 à 4, **caractérisé en ce qu'**une couche intermédiaire est prévue entre la douille (4) de palier de roue et le composant (2) de train de roulement.

6. Agencement de train de roulement selon la revendication 5, **caractérisé en ce que** la couche intermédiaire est appliquée par un soudage par friction.

7. Agencement de train de roulement selon l'une des revendications 1 à 6, **caractérisé en ce que** la douille (4) de palier de roue présente une saillie (14) qui s'étend radialement vers l'extérieur et qui présente une surface de liaison (18) au composant de train de roulement.

8. Agencement de train de roulement selon la revendication 7, **caractérisé en ce que** le composant (2) de train roulement présente un appendice (20) en forme de chapeau qui est soudé à la saillie (14) de la douille (4) de palier de roue par l'intermédiaire de la surface supplémentaire de liaison (18).

9. Agencement de train de roulement selon la revendication 8, **caractérisé en ce qu'**une surface de liaison (16) entre la douille (4) de palier de roue et le composant (2) de train de roulement et une surface supplémentaire de liaison (18) entre la saillie radiale (14) de la douille en acier (8) et le composant (2) de train de roulement présentent l'une par rapport à l'autre un écart axial (d).

10. Procédé de fabrication d'un agencement de train de roulement selon l'une des revendications 1 à 9, **caractérisé en ce qu'**une douille (4) de palier de roue qui est réalisée en acier est reliée à un composant (2) de train de roulement en aluminium ou en alliage d'aluminium par soudage par friction.

11. Procédé selon la revendication 10, pour la fabrication d'un agencement de train de roulement selon la revendication 4, **caractérisé en ce qu'**une couche d'aluminium (6) est appliquée sur la douille (4) de palier de roue, de préférence par placage, et la douille (4) de palier de roue est ensuite soudée sur le composant (2) de train de roulement.
